(19) Europäisches Patentamt
European Patent Office
Office européen des brevets

(11) **EP 2 917 762 B1**

(12) **EUROPÄISCHE PATENTSCHRIFT**

(45) Veröffentlichungstag und Bekanntmachung des Hinweises auf die Patenterteilung:
**17.04.2019 Patentblatt 2019/16**

(51) Int Cl.:
**G01S 17/10** *(2006.01)*   **G01S 7/487** *(2006.01)*
**G01S 17/89** *(2006.01)*   **G01S 17/36** *(2006.01)*

(21) Anmeldenummer: **13763029.9**

(22) Anmeldetag: **11.09.2013**

(86) Internationale Anmeldenummer:
**PCT/EP2013/068818**

(87) Internationale Veröffentlichungsnummer:
**WO 2014/072100 (15.05.2014 Gazette 2014/20)**

(54) **AUFNAHMEVERFAHREN FÜR ZUMINDEST ZWEI TOF-KAMERAS**

RECORDING METHOD FOR AT LEAST TWO TOF CAMERAS

PROCÉDÉ D'ENREGISTREMENT POUR AU MOINS DEUX CAMÉRAS TEMPS DE VOL

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **08.11.2012 AT 11912012**

(43) Veröffentlichungstag der Anmeldung:
**16.09.2015 Patentblatt 2015/38**

(73) Patentinhaber: **Bluetechnix GmbH**
**1140 Wien (AT)**

(72) Erfinder:
• **OBERHAMMER, Roland**
**A-1040 Wien (AT)**

• **HRANITZKY, Robert**
**A-2540 Bad Vöslau (AT)**

(74) Vertreter: **KLIMENT & HENHAPEL**
**Patentanwälte OG**
**Gonzagagasse 15/2**
**1010 Wien (AT)**

(56) Entgegenhaltungen:
**DE-A1-102010 003 409     DE-A1-102011 089 636**

• **BUTTGEN B ET AL: "Pseudonoise Optical Modulation for Real-Time 3-D Imaging With Minimum Interference", IEEE TRANSACTIONS ON CIRCUITS AND SYSTEMS I: REGULAR PAPERS, IEEE, US, Bd. 54, Nr. 10, 1. Oktober 2007 (2007-10-01), Seiten 2109-2119, XP011194105, ISSN: 1549-8328, DOI: 10.1109/TCSI.2007.904598**

**Beschreibung**

Die Erfindung bezieht sich auf ein Verfahren zur Reduktion von Störungen der Tiefenberechnung beim Aufnehmen einer Szene mit zumindest zwei Time-of-Flight-Kameras, die jeweils eine Lichtquelle und einen Bildsensor aufweisen, wobei mit jeder der zumindest zwei Time-of-Flight-Kameras Bildaufnahmevorgänge durchgeführt werden, die einen Messvorgang zur Ermittlung von Tiefeninformation umfassen, wobei der Messvorgang die Emission von moduliertem Licht durch die Lichtquelle, die Detektion von moduliertem Licht nach der Reflexion an Objekten der Szene mit dem Bildsensor und die Berechnung von Tiefeninformation aus der Laufzeit des modulierten Lichtes zwischen Emission und Detektion umfasst.

Bei Time-of-Flight (ToF) -Kameras handelt es sich um Kameras, die nicht nur ein 2D-Bild aufnehmen, sondern für jedes Aufnahmepixel auch eine Tiefeninformation messen. Unter Tiefeninformation werden Informationen über die Distanzen zwischen den einzelnen Objekten einer Szene und der ToF-Kamera verstanden. ToF-Kameras werden auch als aktive Kameras bezeichnet, da sie mit eigener Lichtquelle ausgestattet sind. Das von dieser Lichtquelle emittierte Licht wird an den Objekten einer aufzunehmenden Szene reflektiert und gelangt dadurch in den Erfassungsbereich des Bildsensors der Kamera. Die Tiefeninformation wird aus dem reflektierten Licht über Laufzeit- bzw. Phasendifferenz-Messungen ermittelt. Die Lichtquellen sind üblicherweise LEDs (Light Emitting Devices). Time-of-Flight-Kameras senden moduliertes Licht aus. Das Licht wird typischerweise im Megahertzbereich OOK(On-Off Keying)-moduliert (z.B. mit 20MHz) und so in den Sichtbereich des eigenen Kamerasensors abgestrahlt. Die reflektierten Lichtanteile (Photonen) werden vom Kamerasensor aufgenommen und zur Berechnung der Entfernung des reflektierenden Objekts verwendet. Diese Tiefendaten sind dann neben dem Graustufenbild für Anwendungen verfügbar. In den meisten Anwendungen wird derzeit Infrarotlicht als Beleuchtung verwendet.

ToF-Kameras haben ein breites Anwendungsfeld insbesondere in der Industrie, in der Verkehrstelematik und in der autonomen Robotik. Beispielsweise können die ToF-Kameras in der Industrie als Füllstands- oder Entfernungsmessgeräte im Nahbereich bis Im eingesetzt werden. In der Verkehrstelematik können ToF-Kameras als Fahrzeug- und Personendetektoren und Zähler im Bereich bis 30m eingesetzt werden. In der autonomen Robotik können ToF-Kameras zur Erkennung von Hindernissen und zur Navigation eingesetzt werden.

Das Licht fremder Lichtquellen kann die Tiefenberechnung beeinflussen. Ein Bildsensor z.B. in Art eines PMD-Chips (Photonic Mixer Device) kann für jedes Pixel eine Hintergrundlichtausblendung durchführen, sofern das Hintergrundlicht nicht ähnliche Eigenschaften besitzt wie das ausgesendete modulierte Licht der Kamera. Typischerweise dient diese Funktion dem Ausblenden des Sonnenlichts oder künstlicher Beleuchtung in Räumen. Um die Ausblendung zu erreichen, nimmt der PMD-Chip für jedes Pixel das Licht bei eingeschalteter und ausgeschalteter eigener Lichtquelle auf und subtrahiert die beiden Messergebnisse elektronisch. Ein korrektes Ausblenden von Hintergrundlicht ist nur dann möglich, wenn in all diesen Zeiten die Intensität des Hintergrundlichts konstant bleibt und der PMD-Chip nicht in die elektrische Sättigung gerät. Bei künstlichen Lichtquellen, die im MHz-Bereich moduliert sind, funktioniert das Ausblenden nicht vollständig und die errechneten Tiefendaten sind pixelweise fehlerhaft.

Zu falschen Tiefenberechnungen in einer ToF-Kamera kommt es insbesondere dann, wenn die künstlichen Lichtquellen anderer Kameras im Sichtbereich des eigenen Kamerasensors aufgenommen werden. Das störende Fremdlicht kann entweder direkt oder indirekt über Reflexionen aufgenommen werden. In diesen Fällen sind die Ergebnisse der Tiefenberechnung zumindest teilweise ungültig.

Für viele Anwendungsbereiche sind mehrere Kameras zu verwenden, deren Beobachtungsbereiche sich mitunter überschneiden, etwa in der Überwachung von Räumen, in der Verkehrstelematik oder bei der Steuerung mehrerer Roboter. Die aktiven Lichtquellen der einzelnen Kameras stören jeweils die anderen Kameras bei der Ermittlung der Tiefeninformation, da diese nicht nur das eigene Licht detektieren, sondern auch das Licht der anderen Kameras, auch Fremdlicht genannt. Diese gegenseitigen Störungen führen dazu, dass die distanzbezogenen Messergebnisse verfälscht werden und die Tiefeninformationen nicht mehr den realen Gegebenheiten entsprechen.

Zur Lösung dieses Problems könnten die einzelnen Kameras für einen Parallelbetrieb steuerungsmäßig und funktionsmäßig miteinander vernetzt werden, was den apparativen Aufwand jedoch stark erhöht. Hier werden die ToF-Kameras in einem Netzwerk betrieben. Das Netzwerk kann neben dem Datenaustausch auch zur Synchronisation der Bildaufnahmen verwendet werden, um die Störungen der Kameras untereinander zu vermeiden. Dazu werden Zeitstempel und Reservierungstokens im Netzwerk ausgetauscht. Nur jene Kamera, die das Reservierungstoken besitzt, ist berechtigt eine Bildaufnahme durchzuführen. Das Token kann reihum weitergegeben oder zentral in einem Netzwerkserver verwaltet werden. Diese Maßnahmen verhindern, dass sich die Messvorgänge zweier Kameras beim Aufnehmen einer Szene gegenseitig beeinflussen. Es werden bei dieser Lösung somit Vorkehrungen getroffen, dass das modulierte Licht einer Kamera nicht während des Mess- bzw. Detektionsvorganges einer anderen Kamera emittiert wird.

Probleme der Vernetzung von ToF-Kameras nach diesem Prinzip ergeben sich dadurch, dass dieser Ansatz mit erheblichen Mehrkosten an Material und Entwicklungsaufwand verbunden ist. Darüber hinaus kann sich die Netzlatenz durch die Übergabedauer der Reservierungstokens problematisch auf den Bilddurchsatz des Systems auswirken. Ebenso berücksichtigt dieser Mechanismus nicht die Sichtbereiche der Kameras, da eine Störung nur bei überlappenden Sichtbereichen zu erwarten ist.

Speziell in Anwendungen, bei denen sich die einzelnen Kameras bewegen, müsste ein mehr oder weniger komplexer Mechanismus die sich ständig ändernden bzw. wechselnden überlappenden Sichtbereiche berücksichtigen, um den Bilddurchsatz bei minimaler Störwirkung hoch halten zu können.

In Netzwerken ist auch die Zuverlässigkeit von Bildaufnahmen von der Zuverlässigkeit der Weitergabe der Reservierungstokens aller Kameras abhängig.

Neben diesen daten- und steuerungstechnischen Problemen sind insbesondere die hohen Kosten für einen derartigen Aufwand betreffend Anschluss, Vernetzung in einem gemeinsamen signaltechnischen System sowie erforderliche komplexe Software oftmals Grund dafür, dass die gegenseitigen Störungen der ToF-Kameras überhaupt nicht berücksichtigt werden, was sich negativ auf die Qualität der ermittelten Tiefeninformation auswirkt.

In der Druckschrift "Pseudonoise Optical Modulation for Real-Time 3-D Imaging With Minimum Interference" von Büttgen et al. wird ein anderer Ansatz verfolgt um die Effekte von Störlicht zu vermeiden, nämlich die Verwendung von PN ("pseudonoise")-Sequenzen zur Modulation des Lichts. Weitere Verfahren wurden in DE 10 2010 003 409 A1 und DE 10 2011 089 636 beschrieben.

Ziel der vorliegenden Erfindung besteht darin, ein Verfahren bereitzustellen, das diese Nachteile nicht aufweist und das die gegenseitige negative Beeinflussung mehrerer ToF-Kameras beseitigt oder zumindest minimiert. Dies soll mit geringem apparativem Aufwand bewerkstelligt werden können. Eine Vernetzung der einzelnen Kameras untereinander durch ein gemeinsames Daten- oder Steuernetzwerk soll nicht mehr erforderlich sein. Im Gegensatz zur oben beschriebenen Lösung gemäß Stand der Technik soll die Genauigkeit der Ermittlung der Tiefeninformation erhöht werden, ohne dabei den apparativen Aufwand zu erhöhen. Dieses Ziel wird mit einem eingangs erwähnten Verfahren dadurch erreicht, dass eine erste Time-of-Flight-Kamera aus den Messergebnissen des von ihr durchgeführten Messvorganges ermittelt, inwieweit bei diesem Messvorgang neben dem von der eigenen Lichtquelle emittierten Licht auch moduliertes Licht einer zweiten Time-of-Flight-Kamera als ein den Messvorgang verfälschendes Fremdlicht detektiert wurde, und dass die erste Time-of-Flight-Kamera in Abhängigkeit des Ergebnisses dieser Ermittlung ihren Aufnahmemodus ändert, wobei sich der Messvorgang aus einzelnen Messungen bei derselben Modulationsfrequenz mit jeweils unterschiedlicher Phasendifferenz zwischen der Modulation des emittierten Lichtes und dem Sensormodulationssignal des Bildsensors zusammensetzt und die Veränderung des Aufnahmemodus dadurch erfolgt, dass die Bildaufnahmevorgänge gestoppt oder um eine vorgegebene Zeitspanne unterbrochen werden.

Der Aufnahmemodus wird geändert, wenn moduliertes Licht einer zweiten Kamera detektiert wird oder wenn die detektierte Intensität des modulierten Lichtes einer zweiten Kamera einen Schwellwert überschreitet. Bei mehr als zwei Kameras ist selbstverständlich auch das Fremdlicht aller anderen Kameras in die Messung einbezogen. Um den Aufnahmemodus in Abhängigkeit der Bildsensordatenauswertung zu verändern, sind der Bildsensor und die für die Modulation des emittierten Lichtes verantwortliche Einheit mit der Kamerasteuerung verbunden.

Die erste Kamera besitzt somit die Fähigkeit, bei Vorhandensein von moduliertem Licht einer zweiten Kamera im Sichtbereich der ersten Kamera ihren Aufnahmemodus zu ändern. Die Kamera reagiert aktiv, wenn ein den Messvorgang verfälschendes Fremdlicht vorhanden ist.

Durch eine Änderung des Aufnahmemodus, z.B. eine Unterbrechung des Bildaufnahmevorganges, wird verhindert, dass falsche Tiefeninformation ermittelt wird. Außerdem bewirkt eine Unterbrechung des Bildaufnahmevorganges bzw. des Messvorganges, dass eine andere Kamera bei ihrem Bildaufnahmevorgang nicht durch moduliertes Licht gestört wird. Dadurch wird die Bildqualität der durch die Kameras aufgenommenen Bilder, Bildfolgen bzw. Videostreams deutlich erhöht. Die Schnelligkeit der Bildgewinnung und - auswertung kann durch das autonome Agieren der Kameras gesteigert werden, ohne die Steuerung beschleunigen oder hohen apparativen Aufwand treiben zu müssen.

Dabei ist es nicht nötig, dass die, eine Szene aufnehmenden Kameras signal- bzw. steuerungstechnisch, z.B. über ein Netzwerk, miteinander verbunden sind. Das erfindungsgemäße Verfahren bewirkt eine autonome Synchronisation zweier oder mehrerer ToF-Kameras. Eine Kommunikation oder Vernetzung der Kameras untereinander ist erfindungsgemäß nicht vorgesehen.

Es handelt sich bei der Erfindung um ein autonomes Verfahren bzw. ein Verfahren zur indirekten Koordinierung mehrerer Kameras zur Reduktion von Störungen der Tiefenberechnung bei Bildaufnahmen im Beisein von anderen ToF-Kameras. Ein bevorzugtes Verfahren erlaubt die autonome Erkennung einer Störung, das Abdrehen der eigenen Lichtquelle und das Wiederholen der Bildaufnahme zu einem späteren Zeitpunkt für jedes Einzelbild eines Videostreams.

Dieses Verfahren führt zu einer indirekten Synchronisation aller ToF-Kameras, die Licht der jeweils anderen Kameras in ihrem Sichtbereich detektieren können, und minimiert die wechselseitigen Störungen der aktiven Lichtquellen dieser ToF-Kameras bei Bildaufnahmen, wodurch die Bildqualität erhöht wird.

Erfindungsgemäß erfolgt die Veränderung des Aufnahmemodus dadurch, dass die Bildaufnahmevorgänge gestoppt oder um eine vorgegebene Zeitspanne unterbrochen werden. Dies ermöglicht einen erneuten Versuch zu einem Zeitpunkt, zu dem die jeweils andere Kamera kein moduliertes Licht aussendet. Der Messvorgang selbst setzt sich erfindungsgemäß aus einzelnen Messungen mit jeweils unterschiedlicher Phasendifferenz zwischen der Modulation des emittierten Lichtes und dem Sensormodulationssignal des Bildsensors zusammen. Dies ermöglicht eine empfindlichere Detektion von moduliertem Fremdlicht. Bei dieser Ausführungsform sind im Bildsensor jedem Pixel zumindest zwei Potentialtöpfe zugeordnet. Das Sensormodulationssignal ist das Umschaltsignal, das eine Umschaltung zwischen den Potentialtöpfen steuert.

Bevorzugt ermittelt die zweite Time-of-Flight-Kamera aus den Messergebnissen des von ihr durchgeführten Messvorganges, inwieweit bei diesem Messvorgang neben dem von der eigenen Lichtquelle emittierten Licht auch moduliertes Licht der ersten Time-of-Flight-Kamera detektiert wurde, und ändert die zweite Time-of-Flight-Kamera in Abhängigkeit des Ergebnisses dieser Ermittlung ihren Aufnahmemodus. Somit verfügt nicht nur die erste Kamera über die Möglichkeit einer Anpassung ihres Aufnahmemodus an das Vorhandensein von Fremdlicht, sondern auch die zweite Kamera, sodass sich eine noch effizientere autonome Synchronisation ergibt und besonders zuverlässige Tiefeninformation ermittelt werden kann, ohne die Bildaufnahmerate merklich zu verringern.

Bevorzugt ändert eine Time-of-Flight-Kamera ihren Aufnahmemodus, wenn die von ihr detektierte Intensität des modulierten Lichtes einer anderen Time-of-Flight-Kamera einen vorgegebenen Schwellwert überschreitet. So kann bei geringen Intensitäten von Fremdlicht die Bildgewinnung mit nur geringen Fehlern der Tiefeninformation fortgesetzt werden und erst bei nicht mehr akzeptablen Abweichungen der ermittelten Tiefeninformation zu tatsächlichen Distanzen innerhalb einer Szene der Aufnahmemodus geändert werden.

Bevorzugt umfasst der Messvorgang zumindest vier Messungen, wobei die Phasendifferenzen zwischen der Modulation des emittierten Lichtes und dem Sensormodulationssignal des Bildsensors für die einzelnen der vier Messungen $\varphi_0 + 0°$, $\varphi_0 + 90°$, $\varphi_0 + 180°$ und $\varphi_0 + 270°$ betragen, wobei $\varphi_0$ eine Ausgangsphasendifferenz ist. Dies ermöglicht auf elegante Weise die Bildgewinnung und die gleichzeitige Messung von Fremdlicht. Die Ausgangsphasendifferenz oder Offset-Phasendifferenz $\varphi_0$ ist ein beliebiger Wert, der vorzugsweise 0° beträgt.

Bei dieser Methode werden vier Phasenbilder I(0°), I(90°), 1(180°) und I(270°) aufgenommen (entsprechend den vier Messungen mit den Phasendifferenzen: $\varphi_0 + 0°$, $\varphi_0 + 90°$, $\varphi_0 + 180°$ und $\varphi_0 + 270°$). Neben der Berechnung der Tiefeninformation können aus diesen Phasenbildern Informationen darüber erhalten werden, ob bzw. in welchem Ausmaß moduliertes Licht einer anderen Kamera vorhanden ist. Diese Information wird vorzugsweise aus dem Unterschied zwischen dem Phasenbild I(0°) und dem Phasenbild I(180°), sowie dem Unterschied zwischen dem Phasenbild I(90°) und dem Phasenbild I(270°) ermittelt. Idealerweise, d.h. ohne Fremdlicht, ist I(0°) seinem Betrag nach gleich I(180°) und I(90°) seinem Betrag nach gleich I(270°). Jede Abweichung von dieser Beziehung lässt auf Fremdlicht einer anderen Kamera schließen, und das Ausmaß der Abweichung auf die Intensität des Fremdlichtes.

Mit anderen Worten werden für jedes Tiefenbild vier Belichtungsphasen mit unterschiedlichen Phasenverschiebungen zwischen Modulation des Sensors und des emittierten Lichts verwendet. Wenn diese mathematische Beziehung aufgrund der Einwirkung von Fremdlicht verändert wird, kann auf Fremdlicht geschlossen werden und "Störfälle" können detektiert werden. In diesen Fällen kann keine korrekte Ermittlung der Tiefeninformation mehr gewährleistet werden. Die Kamera schaltet in diesen Fällen ab bzw. unterbricht ihren Bildaufnahmevorgang und versucht es nach einer vorgegebenen Zeitspanne erneut.

Bevorzugt führt eine Time-of-Flight-Kamera vor einem Bildaufnahmevorgang bei ausgeschalteter eigener Lichtquelle einen Messvorgang zur Detektion von Licht durch, und wird in Abhängigkeit des Messergebnisses dieses Messvorganges der Aufnahmemodus dieser Time-of-Flight-Kamera verändert. Dadurch kann bereits in einem vorangehenden Messvorgang das Vorhandensein von Fremdlicht grob abgeschätzt werden.

Bevorzugt verändert die Time-of-Flight-Kamera bei Überschreiten einer vorgegebenen Anzahl an gescheiterten Bildaufnahmevorgängen für eine Bildaufnahme ihren Aufnahmemodus dadurch, dass die Bildaufnahmerate reduziert wird. Durch diese Maßnahme wird die gegenseitige Beeinflussung der, eine Szene aufnehmenden ToF-Kameras mit ihrem modulierten Licht reduziert.

Die Erfindung besteht somit darin, dass beim Aufnehmen einer Szene mit zumindest zwei Time-of-flight-Kameras bei jeder Kamera im Rahmen einer Aufnahme ein Messvorgang zur Ermittlung der Tiefeninformation durchgeführt wird, wobei sich der Messvorgang aus einzelnen Messungen mit jeweils unterschiedlicher Phasendifferenz zwischen dem emittierten Lichtmodulationssignal und dem Sensormodulationssignal zusammensetzt, und dass aus den Messergebnissen des Messvorganges einer ersten Time-of-flight-Kamera ermittelt wird, ob Fremdlicht einer zweiten Time-of-flight-Kamera während des Messvorganges vorhanden war, und dass in Abhängigkeit dieser Ermittlung, d.h. bei Vorhandensein von Fremdlicht, der Aufnahmemodus der ersten Time-of-flight-Kamera verändert wird.

Im Folgenden werden bevorzugte Ausführungsformen der Erfindung anhand der Zeichnung näher beschrieben. Dabei zeigt

Fig. 1 eine Szene und zwei, die Szene aufnehmende Kameras mit ihren jeweiligen Sichtbereichen auf ein Objekt, bei starker Überlagerung (links), bei geringer Überlagerung (Mitte) und ohne Überlagerung (rechts) der Sichtbereiche,

Fig. 2 ein Flussdiagram der Ablaufsteuerung einer Ausführungsform eines erfindungsgemäßen Verfahrens,

Fig. 3 in schematischer Darstellung die Lichtquelle und einen Teil des Lichtsensors einer ToF-Kamera, sowie einen emittierten und an einem Objekt reflektierten Lichtstrahl,

Fig. 4 ein Signaldiagramm zur Messung der Laufzeit des Lichtes,

Fig. 5 ein Signaldiagramm mit vier Messungen bei unterschiedlicher Phasendifferenz zwischen der Modulation des emittierten Lichtes und dem Sensormodulationssignal.

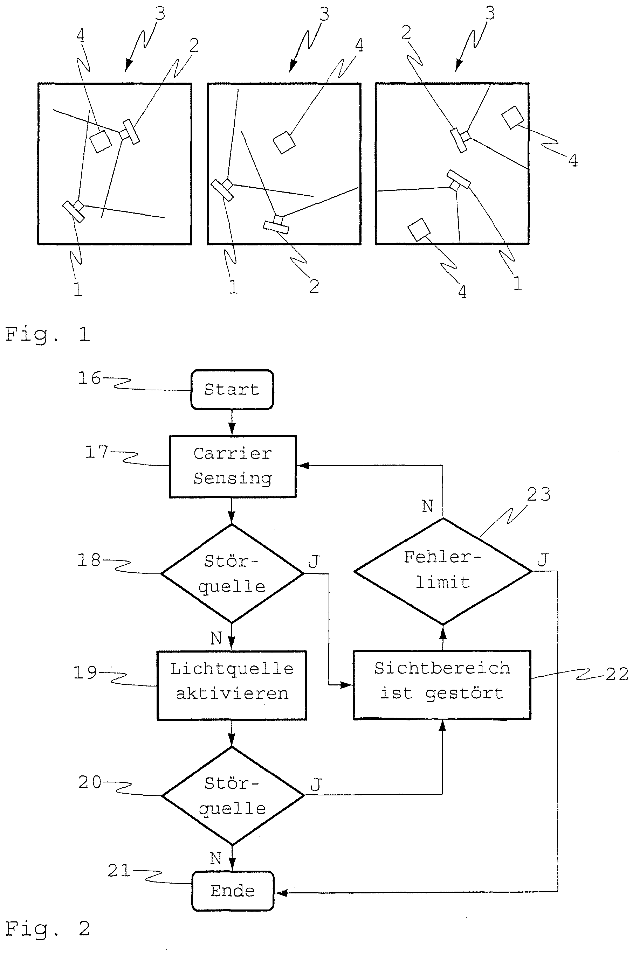

Fig. 1 zeigt eine mit zwei Time-of-Flight-Kameras 1, 2 aufzunehmende Szene 3 aus Objekten 4 in drei möglichen Konstellationen. In der linken Konstellation überlagern die Sichtbereiche der einzelnen Kameras 1, 2 in hohem Ausmaß. Da die Kameras einander gegenüberliegen wird Licht der einen Kamera direkt, d.h. ohne vorherige Reflexion an einem Objekt 4, von der anderen Kamera mit-detektiert. Es ist daher eine starke, durch das emittierte Licht verursachte gegenseitige Beeinflussung der Kameras 1, 2 und damit eine starke Verfälschung der ermittelten Tiefeninformation zu erwarten.

In der in der Mitte dargestellten Konstellation beleuchten die Kameras 1, 2 einander nicht direkt, aber reflektiertes Licht der einen Kamera wird von der jeweils anderen Kamera mit-detektiert. Auch hier ist eine gegenseitige Beeinflussung, wenn auch geringer als in der linken Konstellation, zu erwarten. In der rechts dargestellten Konstellation sind die Sichtbereiche der einzelnen Kameras 1, 2 voneinander abgewandt. Eine gegenseitige Beeinflussung ist daher nicht bzw. lediglich in vernachlässigbarem Ausmaß zu erwarten.

Fig. 2 zeigt eine bevorzugte Ausführungsform des erfindungsgemäßen Verfahrens anhand eines Flussdiagramms mit dem Ablauf der Verfahrensschritte.

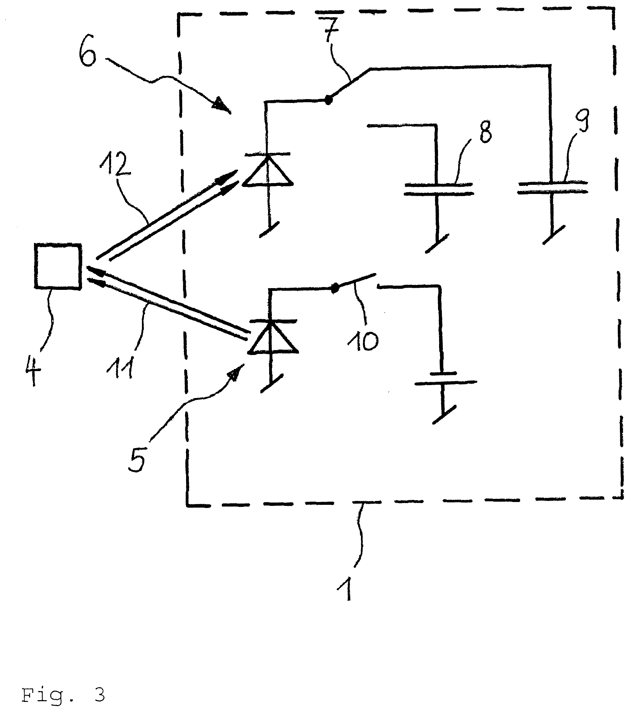

Nach dem Start 16 einer Routine der Time-of-Flight-Kamera wird zunächst ein Messvorgang 17 durchgeführt. Dieser findet vor einem geplanten Bildaufnahmevorgang statt. Während des Messvorganges 17 wird bei ausgeschalteter Lichtquelle eine Detektion von vorhandenem (Fremd-)Licht durchgeführt. Die Kamera überprüft also im ersten Schritt bei ausgeschalteter eigener Lichtquelle 5 (Fig. 3), ob sie modulierte Signale von anderen Lichtquellen ("Störsignale") in ihrem Sichtbereich detektieren kann. Dieser Messvorgang wird auch "Carrier-Sensing" bezeichnet. Falls keine Störsignale detektiert werden, wird nach dem Entscheidungsschritt 18 (Störquelle: Ja-Nein) ein weiterer Messvorgang 19 ausgeführt, ansonsten zu Schritt 22 übergegangen.

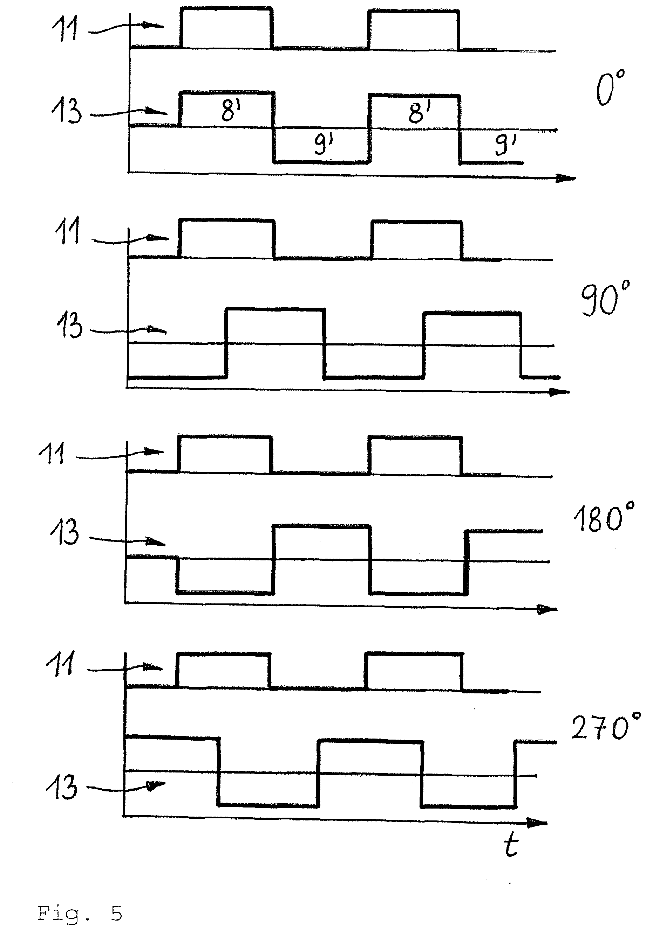

Die Time-of-Flight-Kamera 1, die schematisch in Fig. 3 dargestellt ist, aktiviert nun für den weiteren Messvorgang 19 ihre eigene Lichtquelle 5. Der Messvorgang 19 umfasst die Emission von moduliertem Licht 11 durch die Lichtquelle 5 der Kamera, die Detektion von moduliertem Licht 12 nach der Reflexion an Objekten 4 der Szene 3 mit dem Bildsensor 6 und die Berechnung von Tiefeninformation aus der Laufzeit des modulierten Lichtes zwischen Emission und Detektion. Die Time-of-Flight-Kamera 1 ermittelt aus den Messergebnissen des von ihr durchgeführten Messvorganges 19, inwieweit bei diesem Messvorgang neben dem von ihrer eigenen Lichtquelle 5 emittierten Licht 11 auch moduliertes Licht einer zweiten Time-of-Flight-Kamera 2 detektiert wurde. Eine bevorzugte Ausführungsform dieses Messvorganges wird weiter unten anhand Fig. 5 beschrieben.

Falls auch durch den Messvorgang 19 keine Störsignale detektiert werden, findet nach dem Entscheidungsschritt 20 (Störquelle: Ja-Nein) die Prüfroutine ihr Ende 21 und der Bildaufnahmevorgang wird fortgesetzt. Die Tiefeninformation liegt bereits vor, da diese während des Messvorganges 19 mit ermittelt wurde. Wird hingegen Fremdlicht einer anderen Time-of-Flight-Kamera detektiert, wird zu Schritt 22 übergegangen.

Im Schritt 22 wird als Reaktion auf das Vorhandensein von Fremdlicht der Aufnahmemodus der Kamera geändert. Die Time-of-Flight-Kamera ändert somit in Abhängigkeit des Ergebnisses des Messvorganges 19 ihren Aufnahmemodus.

Eine Veränderung des Aufnahmemodus kann dadurch erfolgen, dass die Bildaufnahmevorgänge gestoppt oder um eine vorgegebene Zeitspanne unterbrochen werden. Die Kamera deaktiviert die eigene Lichtquelle, beendet die Aufnahme und muss eine Zeitdauer, die vorgegeben sein kann oder auch randomisiert ermittelt wird, warten und beginnt dann erneut mit dem ersten Messvorgang 17 (oder alternativ gleich mit dem Messvorgang 19).

Alternativ kann die Veränderung des Aufnahmemodus auch dadurch erfolgen, dass der Messvorgang zur Ermittlung der Tiefeninformation ausgesetzt oder um eine vorgegebene Zeitspanne unterbrochen wird.

Eine weitere Möglichkeit besteht darin, dass die Kamera für den Messvorgang 19 die Modulationsfrequenz des von ihr emittierten Lichtes 11 verändert. Die Kamera könnte somit die Modulationsfrequenz der eigenen Lichtquelle wechseln und wieder beim ersten Messvorgang 17 beginnen. Dieser Vorgang wird auch "Frequency Hopping" genannt. Allerdings bietet der Frequenzwechsel aufgrund der 4-Phasen Berechnung (siehe unten) keinen vollständigen Schutz vor Fremdlichtstörungen auf der vorhergehenden Frequenz. Die Trennung mittels unterschiedlicher Frequenzen funktioniert nur in dem Fall, dass über alle vier Integrationsphasen hinweg das modulierte "Fremdlicht" gleichermaßen anliegt. Dieser Fall ist aber in der Praxis ohne anderweitige Synchronisation der Bildaufnahme zwischen den Kameras eher unwahrscheinlich.

In einer Ausführungsform der Erfindung kann eine Time-of-Flight-Kamera 1 ihren Aufnahmemodus ändern, wenn die von ihr detektierte Intensität des modulierten Lichtes einer (oder mehrere) anderen Time-of-Flight-Kamera 2 einen vorgegebenen Schwellwert überschreitet.

Im optionalen Entscheidungsschritt 23 wird festgestellt, ob ein 'Fehlerlimit' überschritten ist. Dies bedeutet, dass bei Erreichen oder Überschreiten einer maximalen Anzahl an gescheiterten Aufnahmeversuchen für eine Bildaufnahme eine Nachricht an die Kontrollsoftware der Kamera übermittelt wird. In diesem Fall kommt es zu einer für die Anwendung feststellbaren Reduktion der Bildaufnahmerate in Bildern pro Sekunde.

Ist ein Aufnahmezyklus beendet (Ende 21), wird der nächste Aufnahmezyklus mit dem Messvorgang 17 gestartet.

Der erste, einfache Messvorgang 17 bei ausgeschalteter eigener Lichtquelle ist optional, stellt jedoch eine bevorzugte Ausführungsform dar, da einerseits die Störlicht-Detektion zuverlässiger und andererseits die Prüfroutine verkürzt werden kann, wenn bereits während des ersten Messvorganges 17 Störlicht eindeutig festgestellt werden kann.

Anhand der Fig. 3 bis 5 wird ein bevorzugter Messvorgang 19 zur Ermittlung von Tiefeninformation näher beschrieben.

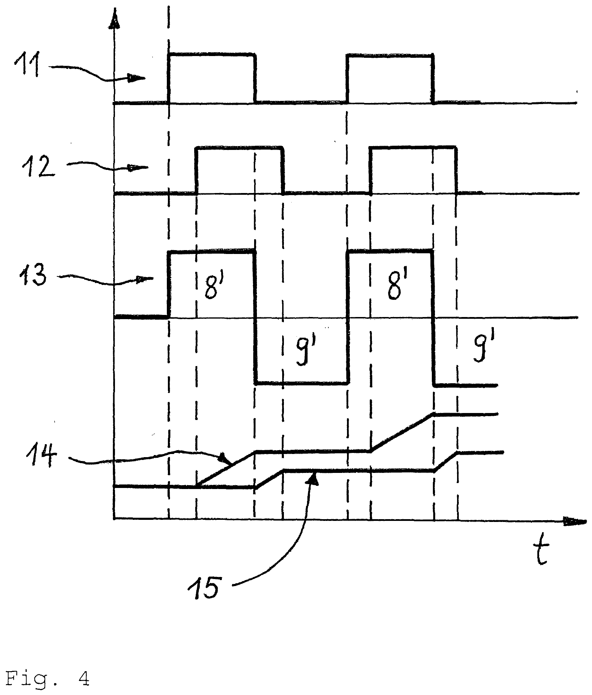

Fig. 3 zeigt eine Time-of-Flight-Kamera 1 mit einer Lichtquelle 5, insbesondere eine LED, zum Aussenden von moduliertem Licht 5. Der nur schematisch dargestellte Schalter 10 ermöglicht den einfachen Fall einer OOK-Modulation (On-Off Keying) mit einer Modulationsfrequenz f. Selbstverständlich sind auch andere Modulationsverfahren einsetzbar. Das von der Lichtquelle emittierte Licht 11 trifft auf ein Objekt 4 einer aufzunehmenden Szene und wird von diesem reflektiert. Das reflektierte Licht 12 wird vom Bildsensor 6 der Kamera 1 detektiert. Die in Fig. 3 für besseres Verständnis vereinfachte Darstellung des Bildsensors 6 enthält nur die für die Aufnahme eines Pixels erforderlichen Mittel. Ein Bildsensor 6 enthält für jedes Pixel ein lichtsensitives Element, z.B. eine Photodiode, der zumindest zwei Potentialtöpfe 8, 9 zugeordnet sind. Ein Schalter 7 erlaubt die Umschaltung zwischen den beiden Potentialtöpfen, sodass abwechselnd (über eine vorgegebene Zeitspanne) Ladung in den einzelnen Potentialtöpfen 8, 9 gesammelt werden kann. Die Umschaltung zwischen den Potentialtöpfen erfolgt durch ein Sensormodulationssignal 13 (Fig. 4). Das Auslesen der Potentialtöpfe 8, 9 erlaubt das Zugreifen auf die Bildinformation.

Fig. 4 zeigt nun anhand eines Signaldiagramms das von der Lichtquelle 5 emittierte modulierte Licht 11, das reflektierte und vom Bildsensor 6 detektierte Licht 12, das Sensormodulationssignal 13, das integrierte Signal 14, das in den ersten Potentialtopf 8 'gelangt' und das integrierte Signal 15, das in den zweiten Potentialtopf 9 'gelangt' jeweils im zeitlichen Verlauf übereinander.

Es ist deutlich zu sehen, dass sich aufgrund der Laufzeit eine zeitliche Verschiebung (Phasenverschiebung) zwischen dem emittierten Lichtsignal 11 und dem detektierten Lichtsignal 12 einstellt.

Das Sensormodulationssignal 13 ist das Umschaltsignal, durch das zwischen den beiden Potentialtöpfen 8, 9 umgeschaltet wird. In der Darstellung von Fig. 4 (und auch Fig. 5) entspricht der positive Teil 8' des Sensormodulationssignals 13 der Schaltung des ersten Potentialtopfes 8 und der negative Teil 9' des Sensormodulationssignals 13 der Schaltung des Potentialtopfes 9. Die Frequenz des Sensormodulationssignals 13 entspricht dabei der Modulationsfrequenz des emittierten Lichtes 11.

Je nach zeitlicher Verschiebung sind die integrierten Signale 14, 15 unterschiedlich stark, sodass aus der Differenz zwischen dem integrierten Signal 14 des ersten Potentialtopfes 8 und dem integrierten Signal 15 des zweiten Potentialtopfes 9 auf die Laufzeit des Lichtes und damit auf die Distanz des Objektes 4 von der Kamera 1 geschlossen werden kann. Eigentlich wird eine Phasenverschiebung detektiert. Ist die Phasenverschiebung 0°, wird das Signal nur im ersten Potentialtop 8 'auf-integriert', während der zweite Potentialtopf leer bleibt. Ist die Phasenverschiebung 90°, sammelt sich in beiden Potentialtöpfen 8, 9 "gleich viel Signal" an.

Fig. 5 zeigt nun ein besonderes Prinzip der Tiefenberechnung, bei dem auch das Vorhandensein von Fremdlicht, also von moduliertem Licht einer fremden Kamera, geprüft werden kann.

Jedes Pixel besteht aus zwei Potentialtöpfen 8, 9, die abwechselnd mit der Modulationsfrequenz des ausgesendeten Lichtes belichtet werden. Die Belichtung erfolgt viermal, wobei bei jeder Belichtung die Phasenverschiebung zwischen dem Sensormodulationssignal 13 (Potentialtopfumschaltung) und der Modulation des emittierten Lichtes 11 um 90° erhöht wird. Somit ergibt sich für die erste Belichtung eine nominelle Phasenverschiebung von 0°, bei der zweiten um 90°, dann um 180° und schließlich um 270° bei der vierten. Durch die Entfernung des reflektierenden Objektes 4 zur Kamera 1 ergibt sich für jede Belichtungsphase eine zusätzliche Phasenverschiebung.

Die Phasendifferenzen zwischen der Modulation des emittierten Lichtes und dem Sensormodulationssignal des Bildsensors beträgt für die einzelnen der vier Messungen $\varphi_0 + 0°$, $\varphi_0 + 90°$, $\varphi_0 + 180°$ und $\varphi_0 + 270°$, wobei $\varphi_0$ eine Ausgangsphasendifferenz bzw. eine Offset-Phasendifferenz ist, die im dargestellten Ausführungsbeispiel 0° beträgt, grundsätzlich jedoch beliebig wählbar ist.

Die Signaldifferenz zwischen den beiden Potentialtöpfen 8, 9 wird als Belichtungswert für jedes Pixel und für jede der vier unterschiedlichen Phasen (0°, 90°, 180°, 270°) ausgegeben, wodurch sich vier Phasenbilder I(0°), I(90°), I(180°) und I(270°) ergeben. Ein Phasenbild wird durch die Differenzbildung zwischen dem Signal des einen Potentialtopfes 8 und dem Signal des anderen Potentialtopfes 9 gebildet. Die Phasenbilder werden für die weitere Berechnung wie folgt herangezogen.

Aus der Differenz zwischen den Phasenbildern I(0°) und I(180°), sowie der Differenz zwischen den Phasenbildern I(90°) und I(270°) kann die Entfernung d zum Objekt 4 mittels des arcus tanges aus dem Quotienten ermittelt werden. Der Betrag ergibt die Amplitude.

$$d \sim \arctan[\ (\ I(270°) - I(90°)\ )\ /\ (\ I(180°) - I(0°)\ )\ ]$$

Mathematisch handelt es sich dabei um eine Korrelation der beiden Rechtecksignale: des Modulationssignals des emittierten Lichtes 11 und des Sensormodulationssignales 13, wobei im Grunde nicht zwingend eine OOK-Modulation notwendig ist, sondern jede beliebige Form für das Modulationssignal verwendbar wäre, sofern die Lichtquelle mit diesem Signal modulierbar ist.

Aus den einzelnen Phasenbildern erfolgt nun auch eine Plausibilitätsprüfung dahingehend, ob nicht Fremdlicht die Messung verfälscht hat. Diese erfolgt folgendermaßen:

Die einzelnen Werte pro Pixel der einzelnen Phasen müssen in einer bestimmten Beziehung stehen, um eine korrekte Tiefenberechnung durchführen zu können. Ist diese Beziehung nicht gegeben, ist keine verlässliche Tiefenberechnung möglich. Eine mögliche Ursache für eine Verletzung dieser Beziehung ist der Einfluss von Fremdlicht, welches aufgrund der jeweils um 90° versetzten Phasendifferenz zwischen den einzelnen Messungen nicht auf alle vier Phasenbilder gleichermaßen einwirkt.

Zur Beurteilung, ob während der Messung Fremdlicht vorhanden war oder nicht, kann die Summe aus dem Phasenbild I(0°) und dem Phasenbild I(180°) gebildet werden und die Summe aus dem Phasenbild I(90°) und dem Phasenbild I(270°) gebildet werden. Diese beiden Summen müssen annähernd 0 ergeben. Ist dies nicht der Fall, wurden die Messungen von Fremdlicht beeinflusst und es kann davon ausgegangen werden, dass die ermittelte Tiefeninformation mit den tatsächlichen Distanzen nicht übereinstimmt. Eine Kollision mit anderen Kameras ist somit auch während eines Bildaufnahmevorganges feststellbar. In diesem Fall wird wie bereits anhand der Fig. 2 erläutert Schritt 22 durchgeführt, nämlich eine Änderung des Aufnahmemodus der Kamera.

**Patentansprüche**

1. Verfahren zur Reduktion von Störungen der Tiefenberechnung beim Aufnehmen einer Szene (3) mit zumindest zwei Time-of-Flight-Kameras (1, 2), die jeweils eine Lichtquelle (5) und einen Bildsensor (6) aufweisen, wobei mit jeder der zumindest zwei Time-of-Flight-Kameras (1, 2) Bildaufnahmevorgänge durchgeführt werden, die einen Messvorgang zur Ermittlung von Tiefeninformation umfassen, wobei der Messvorgang die Emission von moduliertem Licht (11) durch die Lichtquelle (5), die Detektion von moduliertem Licht (12) nach der Reflexion an Objekten (4) der Szene (3) mit dem Bildsensor (6) und die Berechnung von Tiefeninformation aus der Laufzeit des modulierten Lichtes zwischen Emission und Detektion umfasst, **dadurch gekennzeichnet, dass** eine erste Time-of-Flight-Kamera (1) der zumindest zwei Time-of-Flight-Kameras (1, 2) aus den Messergebnissen des von ihr durchgeführten Messvorganges ermittelt, inwieweit bei diesem Messvorgang neben dem von der eigenen Lichtquelle (5) emittierten Licht (11) auch moduliertes Licht einer zweiten Time-of-Flight-Kamera (2) der zumindest zwei Time-of-Flight-Kameras (1, 2) als ein den Messvorgang verfälschendes Fremdlicht detektiert wurde, und dass die erste Time-of-Flight-Kamera (1) in Abhängigkeit des Ergebnisses dieser Ermittlung ihren Aufnahmemodus ändert, wobei sich der Messvorgang aus einzelnen Messungen bei derselben Modulationsfrequenz mit jeweils unterschiedlicher Phasendifferenz zwischen der Modulation des emittierten Lichtes (11) und dem Sensormodulationssignal (13) des Bildsensors (6) zusammensetzt und die Veränderung des Aufnahmemodus dadurch erfolgt, dass die Bildaufnahmevorgänge gestoppt oder um eine vorgegebene Zeitspanne unterbrochen werden.

2. Verfahren nach Anspruch 1, **dadurch gekennzeichnet, dass** die zweite Time-of-Flight-Kamera (2) aus den Messergebnissen des von ihr durchgeführten Messvorganges ermittelt, inwieweit bei diesem Messvorgang neben dem von der eigenen Lichtquelle emittierten Licht (11) auch moduliertes Licht der ersten Time-of-Flight-Kamera (1) detektiert wurde, und dass die zweite Time-of-Flight-Kamera (2) in Abhängigkeit des Ergebnisses dieser Ermittlung ihren Aufnahmemodus ändert.

3. Verfahren nach einem der vorhergehenden Ansprüche, **dadurch gekennzeichnet, dass** eine Time-of-Flight-Kamera (1, 2) der zumindest zwei Time-of-Flight-Kameras (1, 2) ihren Aufnahmemodus ändert, wenn die von ihr detektierte Intensität des modulierten Lichtes einer anderen Time-of-Flight-Kamera (2, 1) der zumindest zwei Time-of-Flight-Kameras (1, 2) einen vorgegebenen Schwellwert überschreitet.

4. Verfahren nach einem der vorhergehenden Ansprüche, **dadurch gekennzeichnet, dass** der Messvorgang zumindest vier Messungen umfasst, wobei die Phasendifferenzen zwischen der Modulation des emittierten Lichtes (11) und dem Sensormodulationssignal (13) des Bildsensors (6) für die einzelnen der vier Messungen $\varphi_0 + 0°$, $\varphi_0 + 90°$, $\varphi_0 + 180°$ und $\varphi_0 + 270°$ betragen, wobei $\varphi_0$ eine Ausgangsphasendifferenz ist.

5. Verfahren nach einem der vorhergehenden Ansprüche, **dadurch gekennzeichnet, dass** eine Time-of-Flight-Kamera (1, 2) der zumindest zwei Time-of-Flight-Kameras (1, 2) vor einem Bildaufnahmevorgang bei ausgeschalteter eigener Lichtquelle (5) einen Messvorgang zur Detektion von Licht durchführt, und dass in Abhängigkeit des Messergebnisses dieses Messvorganges der Aufnahmemodus dieser Time-of-Flight-Kamera (1, 2) verändert wird.

6. Verfahren nach einem der vorhergehenden Ansprüche, **dadurch gekennzeichnet, dass** eine der zumindest zwei Time-of-Flight-Kameras (1, 2) bei Überschreiten einer vorgegebenen Anzahl an gescheiterten Bildaufnahmevorgängen für eine Bildaufnahme ihren Aufnahmemodus dadurch verändert, dass die Bildaufnahmerate reduziert wird.

**Claims**

1. A method for reducing disturbances in the depth calculation while recording a scene (3) using at least two time-of-flight cameras (1, 2), which respectively comprise a light source (5) and an image sensor (6), wherein image recording operations which comprise a measuring operation for determining depth information are carried out using each of the at least two time-of-flight cameras (1, 2), wherein the measuring operation comprises the emission of modulated light (11) by the light source (5), the detection of modulated light (12) after the reflection on objects (4) of the scene (3) using the image sensor (6), and the calculation of depth information from the propagation time of the modulated light between the emission and the detection, **characterized in that** a first time-of-flight camera (1) of the at least two time-of-flight cameras (1, 2) uses the measurement results of the measuring operation carried out by said camera to determine the extent to which modulated light from a second time-of-flight camera (2) of the at least two time-of-flight cameras (1, 2) was also detected in this measuring operation as extraneous light distorting the measuring operation in addition to the light (11) emitted by its own light source (5), and the first time-of-flight camera (1) changes the recording mode thereof on the basis of the result of this determination, wherein the measuring operation is composed of individual measurements at the same modulation frequency of respectively different phase difference between the modulation of the emitted light (11) and the sensor modulation signal (13) of the image sensor (6), and the change in the recording mode occurs in such a way that the image recording operations are stopped or are interrupted for a predetermined time interval.

2. A method according to claim 1, **characterized in that** the second time-of-flight camera (2) uses the measurement results of the measuring operation carried out by said camera to determine the extent to which modulated light from the first time-of-flight camera (1) was detected in this measuring operation in addition to the light (11) emitted by its own light source, and the second time-of-flight camera (2) changes the recording mode thereof on the basis of the result of this determination.

3. A method according to one of the preceding claims, **characterized in that** a time-of-flight camera (1,2) of the at least two time-of-flight cameras (1, 2) changes its recording mode when the intensity of the modulated light of another time-of-flight camera (2, 1) of the at least two time-of-flight cameras (1, 2) as detected by said camera exceeds a predetermined threshold value.

4. A method according to one of the preceding claims, **characterized in that** the measuring process comprises at least four measurements, wherein the phase differences between the modulation of the emitted light (11) and the sensor modulation signal (13) of the image sensor (6) are $\varphi_0 + 0°$, $\varphi_0 + 90°$, $\varphi_0 + 180°$ and $\varphi_0 + 270°$ for each respective one of the four measurements, wherein $\varphi_0$ is an output phase difference.

5. A method according to one of the preceding claims, **characterized in that** a time-of-flight camera (1, 2) of the at least two time-of-flight cameras (1, 2) carries out a measuring operation for the detection of light with deactivated own light source (5) prior to an image recording operation, and the recording mode of said time-of-flight camera (1, 2) is changed depending on the measurement result of said measuring operation.

6. A method according to one of the preceding claims, **characterized in that** one of the at least two time-of-flight cameras (1, 2) changes its recording mode upon exceeding a predetermined number of failed image recording operations for an image recording in such a way that the image recording rate is reduced.

**Revendications**

1. Procédé pour réduire les perturbations du calcul de la profondeur lors de l'acquisition d'une scène (3) avec au moins deux caméras temps de vol (1, 2) qui présentent chacune une source lumineuse (5) et un capteur d'image (6), dans lequel chacune des au moins deux caméras temps de vol (1, 2) exécute des opérations de prise de vue qui comprennent une opération de mesure pour déterminer des informations de profondeur, l'opération de mesure comprenant l'émission de lumière modulée (11) par la source lumineuse (5), la détection de lumière modulée (12) après sa réflexion sur des objets (4) de la scène (3) avec le capteur d'image (6) et le calcul d'informations de profondeur à partir du temps de trajet de la lumière modulée entre l'émission et la détection, **caractérisé en ce qu'**une première caméra temps de vol (1) parmi les au moins deux caméras temps de vol (1, 2) détermine, à partir des résultats de mesure de l'opération de mesure qu'elle effectue, dans quelle mesure, outre la lumière (11) émise par sa propre source lumineuse (5), de la lumière modulée d'une deuxième caméra temps de vol (2) parmi les au moins deux caméras temps de vol (1, 2) est détectée au cours de cette opération de mesure et constitue une lumière étrangère falsifiant l'opération de mesure, et **en ce que** la première caméra temps de vol (1) modifie son mode d'acquisition en fonction du résultat de cette détermination, l'opération de mesure se composant de différentes mesures à la même fréquence de modulation avec un déphasage différent à chaque fois entre la modulation de la lumière émise (11) et le signal de modulation de capteur (13) du capteur d'image (6) et le changement du mode d'acquisition étant effectué par le fait que les opérations de prise de vue sont stoppées ou interrompues pendant un intervalle de temps prédéterminé.

2. Procédé selon la revendication 1, **caractérisé en ce que** la deuxième caméra temps de vol (2) détermine, à partir des résultats de mesure de l'opération de mesure qu'elle effectue, dans quelle mesure, outre la lumière (11) émise par sa propre source lumineuse, de la lumière modulée de la première caméra temps de vol (1) a également été détectée, et **en ce que** la deuxième caméra temps de vol (2) modifie son mode d'acquisition en fonction du résultat de cette détermination.

3. Procédé selon l'une des revendications précédentes, **caractérisé en ce qu'**une caméra temps de vol (1, 2) parmi les au moins deux caméras temps de vol (1, 2) change son mode d'acquisition si l'intensité de la lumière modulée d'une autre caméra temps de vol (2, 1) parmi les au moins deux caméras temps de vol (1, 2) qu'elle détecte dépasse un seuil prédéterminé.

4. Procédé selon l'une des revendications précédentes, **caractérisé en ce que** l'opération de mesure comprend au moins quatre mesures, les déphasages entre la modulation de la lumière émise (11) et le signal de modulation de capteur (13) du capteur d'image (6) étant de $\varphi_0$ +0°, $\varphi_0$ +90°, $\varphi_0$ +180° et $\varphi_0$ +270° pour les quatre mesures respectivement, $\varphi_0$ étant un déphasage initial.

5. Procédé selon l'une des revendications précédentes, **caractérisé en ce qu'**une caméra temps de vol (1, 2) parmi les au moins deux caméras temps de vol (1, 2) effectue une opération de mesure pour détecter la lumière alors que sa propre source lumineuse (5) est éteinte avant une opération de prise de vue et **en ce que** le mode d'acquisition de cette caméra temps de vol (1, 2) est modifié en fonction du résultat de mesure de cette opération de mesure.

6. Procédé selon l'une des revendications précédentes, **caractérisé en ce que** l'une des au moins deux caméras temps de vol (1, 2) change de mode d'acquisition si un nombre prédéterminé d'échecs de l'opération de prise de vue est dépassé pour une prise de vue en réduisant la fréquence de prise de vue.

Fig. 1

Fig. 2

Fig. 3

Fig. 4

Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102010003409 A1

- DE 102011089636

**In der Beschreibung aufgeführte Nicht-Patentliteratur**

- **BÜTTGEN.** *Pseudonoise Optical Modulation for Real-Time 3-D Imaging With Minimum Interference*